# EUROPEAN PATENT SPECIFICATION

(11) **EP 3 053 402 B1**
(45) Date of publication and mention of the grant of the patent: **09.09.2020**
(21) Application number: 13788681.8
(22) Date of filing: 04.10.2013
(51) Int. Cl.: H04W 76/00, H04W 76/14, H04W 92/04, H04W 24/04

(54) **USING A BASE STATION WITH A FAILED INTERFACE TO CORE NETWORK TO ASSIST WITH MOBILE STATION-TO-MOBILE STATION COMMUNICATIONS**
VERWENDUNG EINER BASISSTATION MIT EINER DEFEKTEN SCHNITTSTELLE ZU EINEM KERNNETZWERK ZUR UNTERSTÜTZUNG VON KOMMUNIKATIONEN ZWISCHEN MOBILSTATIONEN
UTILISATION D'UNE STATION DE BASE AVEC UNE INTERFACE DÉFAILLANTE AVEC UN RÉSEAU CENTRAL POUR FACILITER LES COMMUNICATIONS DE STATION MOBILE À STATION MOBILE

(43) Date of publication of application: 10.08.2016
(73) Proprietor: Nokia Solutions and Networks Oy, 02610 Espoo (FI)
(72) Inventor: VAN PHAN, Vinh, FI-90100 Oulu (FI); YU, Ling, FI-90650 Oulu (FI); PEKONEN, Johanna Katariina, FI-02110 Espoo (FI); VESTERINEN, Seppo Ilmari, FI-90460 Oulunsalo (FI)
(74) Representative: Nokia EPO representatives
(86) International application number: PCT/EP2013/070657
(87) International publication number: WO 2015/049007

(56) References cited:
- WO-A1-2013/098461
- GB-A- 2 466 626
- US-A1- 2013 250 771
- Lu Qianxi ET AL: "Clustering Schemes for D2D Communications Under Partial/No Network Coverage", IEEE Broadband Wireless Access Workshop, 30 August 2013 (2013-08-30), pages 1-6, XP055125265, KTH Publication Database DiVA Retrieved from the Internet: URL:http://www.diva-portal.org/smash/get/d iva2:641240/FULLTEXT01.pdf [retrieved on 2014-06-26]

## Description

### TECHNICAL FIELD

This description relates to wireless networks.

### BACKGROUND

A communication system may be a facility that enables communication between two or more nodes or devices, such as fixed or mobile communication devices. Signals can be carried on wired or wireless carriers.

An example of a cellular communication system is an architecture that is being standardized by the 3^{rd} Generation Partnership Project (3GPP). A recent development in this field is often referred to as the long-term evolution (LTE) of the Universal Mobile Telecommunications System (UMTS) radio-access technology. E-UTRA (evolved UMTS Terrestrial Radio Access) is the air interface of 3GPP's Long Term Evolution (LTE) upgrade path for mobile networks. In LTE, base stations, which are referred to as enhanced Node Bs (eNBs), provide wireless access within a coverage area or cell. In LTE, mobile devices, or mobile stations are referred to as user equipments (UE). LTE has included a number of improvements or developments. US 2013/0250771 discloses a solution in which base stations may control, if so requested by a group call center, establishment of a device-to-device cluster for a group call. GB 2466626 discloses a solution, in which an operation mode of a base station is selected based on overlap status of one or more neighbouring base stations, the overlap status being received from a central controller.

### SUMMARY

The object of the invention is achieved by a method, a computer program product, and a base station, which are characterized by what is stated in the independent claims. The preferred embodiments of the invention are disclosed in the dependent claims.

According to an example, a method may include detecting, by a base station (BS) while operating in a normal or infrastructure mode of the BS, a notification message to one or more mobile stations (MSs) of a cell indicating the failure of the BS-core network interface; and selecting, by the BS, a new mode of operation for the BS, the new mode of operation for the BS includes at least one of the following: to cease operating or a non-operational mode; and to operate in a device-to-device (D2D) assistance mode of operation in which the BS assists direct MS-to-MS communications.

According to another example, an apparatus may include at least one processor and at least one memory including computer instructions, when executed by the at least one processor, cause the apparatus to: detect, by a base station (BS) while operating in a normal or infrastructure mode of operation, a failure of an interface between the BS and a core network (BS-core network interface); send, by the BS, a notification message to one or more mobile stations (MSs) of a cell indicating the failure of the BS-core network interface; and select, by the BS, a new mode of operation for the BS, the new mode of operation for the BS includes at least one of the following: to cease operating or a non-operational mode; and to operate in a device-to-device (D2D) assistance mode of operation in which the BS assists direct MS-to-MS communications.

A computer program product is disclosed. The computer program product includes a non-transitory computer-readable storage medium and storing executable code that, when executed by at least one data processing apparatus, is configured to cause the at least one data processing apparatus to perform a method including: detecting, by a base station (BS) while operating in a normal or infrastructure mode of operation, a failure of an interface between the BS and a core network (BS-core network interface); sending, by the BS, a notification message to one or more mobile stations (MSs) of a cell indicating the failure of the BS-core network interface; and selecting, by the BS, a new mode of operation for the BS, the new mode of operation for the BS includes at least one of the following: to cease operating or a non-operational mode; and to operate in a device-to-device (D2D) assistance mode of operation in which the BS assists direct MS-to-MS communications.

According to another example, a method includes detecting, by a base station (BS), a failure of an interface between the BS and a core network (BS-core network interface); sending, by the BS, a notification message to one or more mobile stations (MSs) of a cell indicating the failure of the BS-core network interface; receiving, by the BS from one or more of the MSs of the cell, a device-to-device (D2D) assistance request that requests the BS to assist with direct MS-to-MS communications for the cell; selecting, by the BS, a D2D assistance mode of operation for the BS based on at least the one or more assistance requests; and sending, by the BS to the one or more MSs in the cell, a mode indication message that identifies the selected D2D assistance mode of operation.

According to another example, an apparatus is provided that includes at least one processor and at least one memory including computer instructions, when executed by the at least one processor, cause the apparatus to: detect, by a base station (BS), a failure of an interface between the BS and a core network (BS-core network interface); send, by the BS, a notification message to one or more mobile stations (MSs) of a cell indicating the failure of the BS-core network interface; receive, by the BS from one or more of the MSs of the cell, a device-to-device (D2D) assistance request that requests the BS to assist with direct MS-to-MS communications for the cell; select, by the BS, a D2D assistance mode of operation for the BS based on at least the one or more assistance requests; and send, by the BS to the one or more MSs in the cell, a mode indication message that identifies the selected D2D assistance mode of operation.

According to another example, a computer program product is provided and includes a non-transitory computer-readable storage medium and storing executable code that, when executed by at least one data processing apparatus, is configured to cause the at least one data processing apparatus to perform a method including: detecting, by a base station (BS), a failure of an interface between the BS and a core network (BS-core network interface); sending, by the BS, a notification message to one or more mobile stations (MSs) of a cell indicating the failure of the BS-core network interface; receiving, by the BS from one or more of the MSs of the cell, a device-to-device (D2D) assistance request that requests the BS to assist with direct MS-to-MS communications for the cell; selecting, by the BS, a D2D assistance mode of operation for the BS based on at least the one or more assistance requests; and sending, by the BS to the one or more MSs in the cell, a mode indication message that identifies the selected D2D assistance mode of operation.

According to another example, a method includes: receiving, by a mobile stations (MS) from a base station (BS), a notification message indicating a failure of a BS-core network interface; determining, by the MS, if the MS is capable of D2D communications; sending, by the MS to the BS if the MS is capable of D2D (device-to-device) communications, a D2D assistance request that requests the BS to assist with direct MS-to-MS communications for the cell; and receiving, by the MS from the BS, a mode indication message that identifies the selected D2D assistance mode of operation.

According to another example, an apparatus is provided that includes at least one processor and at least one memory including computer instructions, when executed by the at least one processor, cause the apparatus to: receive, by a mobile stations (MS) from a base station (BS), a notification message indicating a failure of a BS-core network interface; determine, by the MS, if the MS is capable of D2D communications; send, by the MS to the BS if the MS is capable of D2D (device-to-device) communications, a D2D assistance request that requests the BS to assist with direct MS-to-MS communications for the cell; and receive, by the MS from the BS, a mode indication message that identifies the selected D2D assistance mode of operation.

According to another example, a computer program product is provided that includes a non-transitory computer-readable storage medium and storing executable code that, when executed by at least one data processing apparatus, is configured to cause the at least one data processing apparatus to perform a method including: receiving, by a mobile stations (MS) from a base station (BS), a notification message indicating a failure of a BS-core network interface; determining, by the MS, if the MS is capable of D2D communications; sending, by the MS to the BS if the MS is capable of D2D (device-to-device) communications, a D2D assistance request that requests the BS to assist with direct MS-to-MS communications for the cell; and receiving, by the MS from the BS, a mode indication message that identifies the selected D2D assistance mode of operation.

The details of one or more implementations are set forth in the accompanying drawings and the description below. Other features will be apparent from the description and drawings, and from the claims.

### BRIEF DESCRIPTION OF THE DRAWINGS

FIG. 1 is a block diagram of a wireless network 130 according to an example implementation.
FIG. 2 is a diagram illustrating operation of a wireless network according to an example implementation.
FIG. 3 is a flow chart illustrating operation of a base station (BS) according to an example implementation.
FIG. 4 is a flow chart illustrating operation of a base station according to another example implementation.
FIG. 5 is a flow chart illustrating operation of a mobile station (MS) according to an example implementation.
FIG. 6 is a block diagram of a wireless station (e.g., BS or MS) 600 according to an example implementation.

### DETAILED DESCRIPTION

In some cases, a S1 interface between a base station and core network may fail, such as during a natural disaster, equipment failure, or other condition. In such a situation, according to an example implementation, the mobile stations (MSs) within the cell may switch from a normal (cellular or infrastructure) mode where signals and data are transferred via the base station (BS) to a device-to-device (D2D) mode in which MSs may directly communicate with each other within the cell. In the event that MSs are operating in a D2D mode of operation, the BS may transition to a new mode of operation, where this new mode may depend on the amount or level of assistance that the BS will provide the MSs for their D2D operation.

According to an example implementation, techniques are provided to detect a failure of a S1 interface between a base station (BS) and a core network. The BS may send a S1 failure notification message to one or more MSs within a cell. The MSs may begin, e.g., during or after a transition period, a device-to-device (D2D) mode of operation where the MSs may directly communicate with each other within the cell. Also, after the transition period, the BS may also begin a new operation mode that may be either a non-operational mode or a D2D assistance mode in which the BS may assist MSs operating in the D2D mode. In addition, in some cases, one or more MSs may send a D2D assistance request to the BS during the transition period to request assistance from the BS for their D2D operation. The BS may select one of a plurality of new operation modes (e.g., non-operational mode, DL (downlink) only D2D assistance mode, and an UL/DL (uplink/downlink) D2D assistance mode) based on, for example: 1) a preconfigured mode that the BS selects in response to a failed S1 interface; 2) information known by the BS, e.g., numbers of current MSs that are connected to the BS, capability information for MSs such as based on a capability exchange performed as part of a MS connection to the BS or other information, and 3) information (e.g., D2D or PS capability information) received by the BS during the transition period, such as via the one or more D2D assistance requests or other messages from MSs in the cell.

In addition, according to an example implementation, in the event of a failed S1 interface, the BS may limit or restrict access to the cell to only specific MSs, or specific users. In an example implementation, access class barring information may be used to admit or permit only D2D MSs (MSs that are capable of D2D operation), public safety (PS) MSs, or PS D2D MSs (public safety MSs that are D2D capable) for example, in the event of an S1 interface failure or breakage.

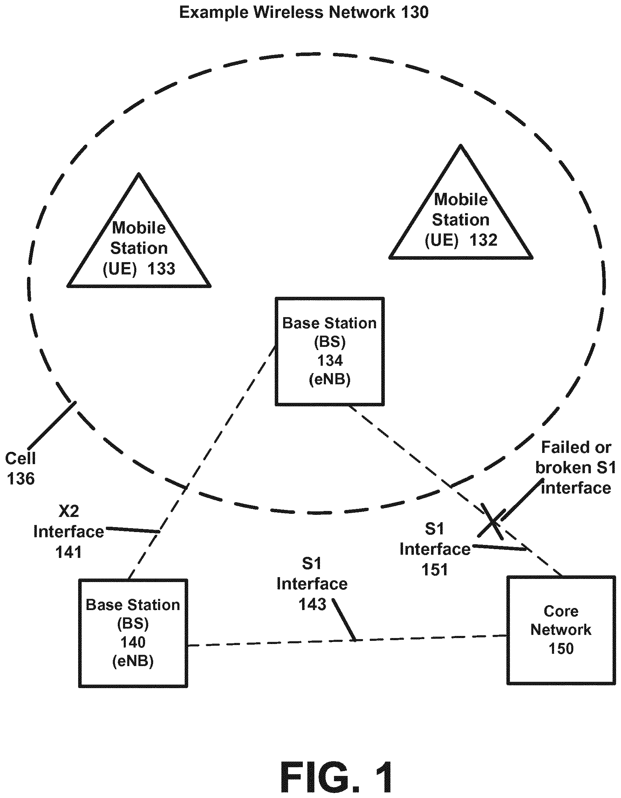

FIG. 1 is a block diagram of a wireless network 130 according to an example implementation. In the wireless network 130 of FIG. 1, mobile stations (MSs) 132 and 133, which may also be referred to as user equipments (UEs), may be connected (and in communication) with a base station (BS) 134, which may also be referred to as an enhanced Node B (eNB). BS 134 provides wireless coverage within a cell 136. Although only two MSs are shown within cell 136 (connected or attached to BS 134), any number of MSs may be provided. BS 134 is also connected to a core network 150 via a S1 interface 151 (an example of a BS-core network interface). A second BS, BS 140, is also shown and is connected to BS 134 via a X2 interface 141 (an example of a BS-BS interface). Although not shown, one or more MSs may be connected to or attached to BS 140. BS 140 may also be connected to the core network 150 via S1 interface (or BS-core network interface) 143. This is merely one simple example of a wireless network, and others may be used.

In LTE, core network 150 may be referred to as Evolved Packet Core (EPC), which may include a mobility management entity (MME) which may handle or assist with mobility/handover of MSs between BSs, one or more gateways that may forward data and control signals between the BSs and packet data networks or the Internet, and other control functions or blocks. Only a few of the blocks or functions of the example core network are described, and the core network 150 may include different blocks/functions, for example.

In some situations, the S1 interface or link (or BS-core network interface) may fail or break, which interrupts or prevents transmission of data between the BS and the core network 150. A failed or broken S1 interface may occur due to a variety of circumstances, such as natural disasters (e.g., earthquakes, hurricane or storm), war, failure of power company infrastructure, or other crisis or emergency. These are merely some example situations where a failed S1 interface is likely to occur, but there may be other situations as well. When the S1 interface fails, packets or data from the core network 150 will no longer be received by the BS 210, and BS 210 is unable to send or forward data or other signals to the core network 150.

According to an example implementation, after failure of an S1 interface, it may be desirable to allow MSs of at least one or more select classes of MSs to continue communicating or operating in a device-to-device (D2D) mode in which MSs may directly communicate with each other. For example, access to the cell may be limited to public safety MSs (e.g., policemen, firemen, doctors, and other emergency or rescue personnel) that are capable of D2D communications may be permitted to continue communicating via a D2D mode of operation. This may allow mission critical communications to continue for PS D2D MSs, even though the S1 (or BS-core network) interface is broken or failed.

Furthermore, even though the S1 interface is failed or broken, the BS may still be capable of operating within the cell by transmitting downlink signals, receiving and processing uplink signals from one or more MSs, etc. Therefore, in some cases, the BS may continue operating in a D2D assistance mode in which the BS may assist the D2D communications within the cell.

According to an example implementation, in the event of a failure of an S1 interface for a cell, one or more MSs within the cell may transition from a normal (or infrastructure mode) of operation that relies on the BS 210 to transfer data to and from a connected MS(s), to a D2D (or device-to-device) mode of operation in which direct MS-to-MS communication is performed.

Also, according to an example implementation, in response to a failed or broken S1 interface, the BS may transition to one of several different operation modes, depending on the BS's capabilities, any requests from one or more connected MSs, and other factors. For example, the BS may simply cease operating (a non-operational mode), e.g., if the BS is unable to assist D2D communications, or if there is limited number of D2D MSs (e.g., possibly little need for D2D assistance by the BS if there are only a few D2D MSs in the cell). Alternatively, the BS may transition to a D2D assistance mode, or to one of several D2D assistance modes of operation in which the BS may assist MSs in the cell with D2D communication. For example, the BS may transition to operate in a DL (downlink) only D2D assistance mode of operation in which the BS may send DL signals, such as reference signals or other signals to MSs within the cell. Or, the BS may transition to operate in an UL/DL (uplink/downlink) D2D assistance mode in which the BS may assist D2D communications by transmitting DL signals and receiving UL signals from MSs. This second UL/DL D2D assistance mode may allow the BS to receive signals and thereby provide further assistance or coordination to D2D MSs within the cell, e.g., by receiving signals from MSs, sending power control signals, receiving requests for resources from MSs, and allocating resources to MSs or sending out scheduling or resource allocation information that allocates or schedules resources to MSs for D2D communication. These are merely some examples, and the BS may send and receive other signals in a D2D assistance mode.

In addition, in the event of a failed S1 interface, the BS may limit or restrict access to resources within the cell to only specific MSs, or specific users, such as emergency services users/MSs, and/or public safety users/MSs. For example, public safety (PS) users/MSs may include any MS that is assigned to a user that is related to or involved with public safety, such as firemen, policemen, doctors and nurses, rescue teams, and other emergency or crisis personnel, for example. Each MS may store access class membership information, e.g., within a SIM (Subscriber Identity Module) card or a USIM (Universal Subscriber Identity Module) that is stored within the MS, that indicates that the MS is a member of one or more access classes. For example, access class 14 may be for emergency services MSs. Similarly, separate access classes may be provided for: D2D MSs (MSs that are capable of D2D operation), public safety MSs, and/or PS D2D MSs (public safety MSs that are capable of D2D operation). A BS may transmit barring information or access barring information, e.g., within a system information block (SIB), such as SIB1 or SIB2, which may be broadcast to MSs within the cell, or by sending other message. The barring information may include, for example, an access barring list that identifies one or more access classes in order to bar or prevent certain access classes from accessing a cell or network (e.g., by preventing the MSs from access resources of such cell or network), and/or to permit or admit other classes to access or use such cell or network resources. Thus, for example, the access barring information may be used to limit access to the cell to only the specified class(es) of MSs, e.g.,: D2D MSs (MSs that are capable of D2D operation), public safety (PS) MSs and/or PS D2D MSs.

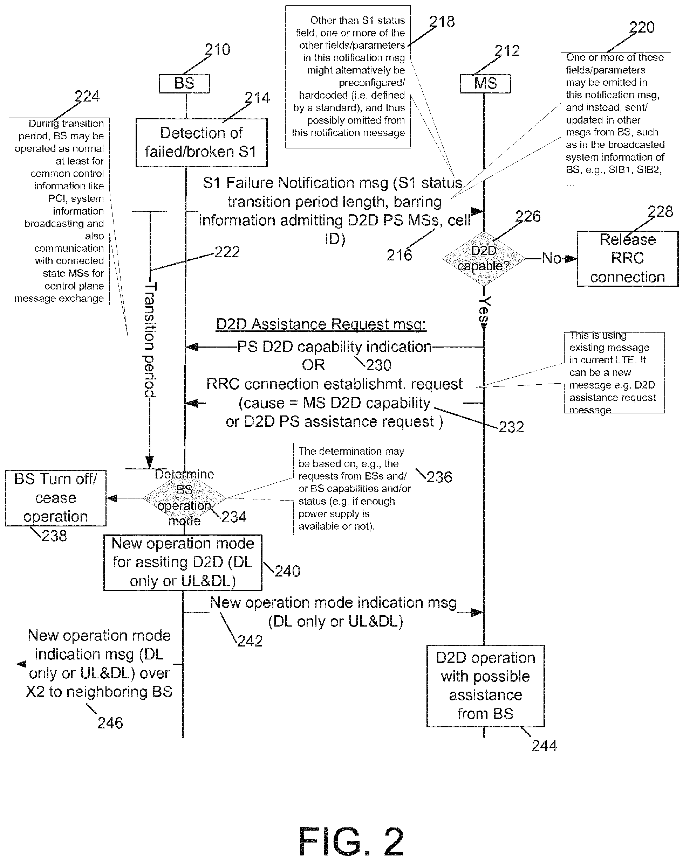

FIG. 2 is a diagram illustrating operation of a wireless network according to an example implementation. Mobile station (MS) 212 may be, for example, connected to a base station (BS) 210. Although not shown, other MSs may be connected or attached to BS 210. Also, although not shown in FIG. 2, there may be one or more MSs within a cell provided by BS 210 that are not connected to BS 210. For example, these non-connected MSs in the cell may be in an idle (e.g., RRC-Idle) state, and not in a connected or attached (e.g., RRC-connected) state with respect to the BS or cell.

At 214, BS 210 detects a failure of a S1 interface to the core network, which may be more generally referred to as the BS-core network interface. This breakage or failure of the S1 interface (or link or connection) may be detected, for example, by the BS 210 detecting an expiration of a re-transmission timer, or failure of the core network 150 to provide an expected signal or acknowledgement to BS 210 within a certain time period, or other condition indicating the failure of the S1 interface or link between the BS 210 and the core network. Also, MS 212, and other MSs within the cell, may also be in communication with the core network 150, e.g., to receive handover instructions or other communications. Therefore, a MS, such as MS 212 may similarly detect a non-responsive BS 210, and may report this information to BS 210 as a failed S1 interface. These are merely some examples, and other techniques may be used to detect a failed S1 interface.

As shown in FIG. 2, BS 210 may transmit or send a S1 failure notification message 216 to one or more (or all) of the MSs within the cell, including to MS 212. According to an example implementation, the S1 failure notification message 216 may include one or more fields or parameters, such as: a S1 status field that may indicate a status of the S1 interface as "failed" in this example, a transition period length, a barring information, and a cell ID for the cell.

The transition period length identifies a length of a transition period 222 after the detection of the failed S1 interface (or sending of the S1 failure notification message) during which the BS 210 may continue operating in a normal (cellular or infrastructure) mode. As noted by box 224, during the transition period 222, BS 210 may be operated in a normal (or infrastructure) mode, at least (for example) for transmission of common control information to MSs including the BS 210 transmitting the cell's physical cell ID (PCI), system information blocks (SIBs), reference signals, etc. The BS 210 may also communicate with connected MSs to exchange control plane messages during the transition period 222. The BS 210 may enter a new mode of operation (e.g., a D2D assistance mode, or a non-operational mode) after expiration of the transition period 222.

A BS may limit access to a cell by sending or broadcasting access class barring information. For example, the BS may transmit the access class barring information via broadcasted system information block (e.g., SIB2), or within a S1 failure notification message 216, or within a new operation mode indication message 242, or within other message(s). Some MSs may be members of one or more high-priority access classes, such as emergency MSs, or other high-priority MSs. Some example high-priority access classes may include: Access class 11 - PLMN (public land mobile network); Access class 12 - security services; Access class 13 - public utilities; Access class 14 - emergency services; Access class 15 - PLMN (public land mobile network) staff. According to an example implementation, one or more additional high-priority access classes may be provided or assigned to various public safety (PS) MSs and/or D2D MSs, such as: Access class 16 - D2D MSs; Access class 17 - public safety MSs; Access class 18 for public safety (PS) D2D MSs, etc.

As noted, the BS may broadcast access class barring information to restrict access to the network or cell. According to an example implementation, the access class barring information may include, for example, a barring time which may indicate a time period for which the barring information is valid, and a bit string for high priority access classes (e.g., ac-BarringForSpecialAC). The bit string for high-priority access classes may include a bit for each high-priority access class, e.g., to indicate whether one or more of the high-priority access class (e.g., access classes 11, 12, 13, ...18) is barred or not barred from the cell. For example, the bit string for high-priority access classes will indicate a status of "not barred" for an access class to indicate that the associated access class is permitted to access the cell. If at least one bit for an access class of which a MS is a member indicates "not barred", then the MS is not barred, for example. Therefore, in this manner, access class barring information may be used to admit or permit certain access classes of MSs to access a cell, while barring or preventing other access classes from accessing the cell. In an example implementation, in the event of an S1 failure, for example, this access class barring information may be used by a BS to admit or permit only D2D MSs (MSs that are capable of D2D operation), public safety (PS) MSs, or PS D2D MSs (public safety MSs that are D2D capable) to access or use the cell.

Referring to FIG. 2, as noted in box 218, one or more of the fields/parameters may be omitted from the notification message 216, e.g., if such field or parameter is preconfigured or specified for the BS and/or MSs in advance based on a standard or predetermined configuration. Alternatively, as noted within box 220, one or more of the fields or parameters of the S1 failure notification message 216 may be omitted from the notification message 216, and instead, sent (or updated) via other message(s) sent by the BS 210, such as, for example, in broadcasted system information block (or SIB), e.g., SIB1, SIB2, etc.

At 226, in response to the S1 failure notification message 216, the MS 212 may determine whether it is D2D capable (e.g. capable of directly communicating with other MSs in a D2D mode), e.g., based on D2D capability information stored within the MS. If the MS 212 is not D2D capable, then at 228, the MS 212 may release its RRC (radio resource connection) connection with the cell. This is because, for example, the MS 212 knows that the cell will move from an infrastructure (or cellular) mode to a D2D mode at the end of the transition period length, and only D2D capable MSs may then be able to communicate within the cell in the D2D mode. Thus, in this example, there is no need for the MS 212 to continue its connection to BS 210 after the S1 failure at 216 unless the MS 212 is D2D capable, for example. This is merely one illustrative operation for the MS 212 at 228, and other operations may be performed instead.

According to one example implementation, one or more of the MSs in the cell, including the MS 212, may send a D2D assistance request message 230, e.g., within the transition period 222, to request that the BS provide some assistance with D2D communications within the cell. The D2D assistance request message may be provided within (or as part of) an existing message (e.g., within LTE), or may be sent as a separate message. As an example of a D2D assistance request message 230, the MS 212 may send a D2D capability indication 231 that indicates a capability for the MS as D2D (e.g., capable of D2D communications), or public safety (PS) D2D, for example. This D2D capability indication 231 may be interpreted by BS 210, for example, as a request for BS assistance with D2D communications. As another example of a D2D assistance request message 230, the MS 212, e.g., which may be in an idle state (e.g., RRC-idle) may send a RRC (Radio Resource Control) connection establishment request message 232 with a cause set to, e.g., D2D, MS D2D capability, D2D assistance request; D2D PS assistance request, or other D2D-related request. In another example, MSs that are in a connected state to the BS (e.g., RRC-connected) may send a RRC connection re-establishment message with one or more of the same causes listed above for RRC connection establishment. Other D2D assistance request messages may be used.

At 234, e.g., within the transition period 222, the BS 210 determines a new operation mode for the BS 210. The new operation mode may be selected as either a non-operational mode 238 (e.g., where BS 210 turns off or at least ceases operation within the cell), or as, e.g., one of a plurality of D2D assistance modes 240 where the BS 210 provides assistance to MSs for D2D communications within the cell. The D2D assistance mode 240 may include, for example, a downlink (DL) only D2D assistance mode (or DL only mode) in which the BS 210 sends DL signals to one or more MSs within the cell, or an uplink/downlink (UL/DL) mode in which the BS 210 may both receive and process UL signals from one or more of the MSs within the cell and transmits/sends DL signals to MSs within the cell. These are merely some example D2D assistance modes, and other modes may be used.

According to one example implementation, in the DL only D2D assistance mode, the BS 210 may send DL signals to the MSs including synchronization or reference signals that may be used by MSs to facilitate the synchronization of the D2D communications between MSs, broadcast DL control signals and other signals to MSs. In the UL/DL D2D assistance mode, the BS 210 may provide a larger set of RAN (radio access network) services and functions to the MSs in the cell, such as receiving signals from MSs, and transmitting DL synchronization signals and/or reference signals for synchronization; measuring radio signals received from MSs and sending power control signals to one or more MSs; transmitting DL common control information, system and cell information, and the BS sending D2D assisting information for local D2D discovery and communications. For example, the BS may receive resource requests for D2D communications from one or more MSs, allocate or schedule wireless or cell resources to one or more of the MSs for D2D communications, and the BS 210 may then broadcast or send a transmission schedule or an allocation of resources to the MSs so as to reduce the likelihood of signal interference between MSs operating in D2D mode. In this manner, the BS may coordinate D2D communications by providing reference signals or other synchronization signals to allow MSs to perform synchronization for transmitting and receiving signals, and by allocating cell resources to D2D MSs for transmission. These are merely a few examples of the signals and services that the BS in a D2D assistance mode may transmit or provide to the D2D MSs, and other signals and services may be provided by the BS.

BS 210 may send the MSs within the area or cell a new operation mode indication message 242 that identifies the selected new operation mode, e.g., as the D2D assistance mode, or as a specific D2D assistance mode (in the case where there may be multiple D2D assistance modes), such as a DL only D2D assistance mode or a UL/DL D2D assistance mode. These are merely some example modes of operation. Mode indication message 242 may also include barring information to permit or bar certain classes of MSs from accessing the cell or cell resources. At 244, the MS 212, and other MSs within the cell, may perform D2D communications with possible assistance from the BS 210. Also, BS 210 may send a new operation mode indication message 246 to one or more other BSs or cells (e.g., to one or more neighbor BSs) via an X2 interface to identify the new operation mode for the cell.

At 234, BS 210 may determine a new operation mode using a variety of different techniques or based on different information. According to one example implementation, the BS may automatically select a specific mode that is preconfigured, e.g., non-operational mode, DL only D2D assistance mode, or UL/DL D2D assistance mode, for example.

As another example, the BS 210 may determine the new operation mode based on its own capabilities (e.g., does BS 210 have capabilities to provide D2D assistance?), current conditions for BS 210 (e.g., is there sufficient power for BS 210 to continue operating beyond transition period 222?). For example, the BS 210 may select a new mode as the non-operational mode 238 if the BS does not have sufficient capabilities to provide D2D assistance, or if there is insufficient power to continue operating beyond the transition period, 222, etc.

The BS may also determine a new mode of operation based on information regarding MSs within the cell, which may include 1) information already known by the BS regarding the current MSs in the cell, and 2) information obtained by the BS from MSs during the transition period, such as from D2D requests or other messages received by the BS 210 from one or more MSs within the cell.

With respect to information already known by BS 210, each MS may have provided capability information to the BS as part of the connection establishment process. As a result, the BS 210 may be aware of one or more features or capabilities of each MS, such as whether each MS is D2D capable, whether each MS is a PS MS or not, and generally which access classes each PS may be a member of, for example. For example, BS 210 may determine the new mode of operation based on information regarding one or more MSs in the cell, such as, for example: a current number of MSs connected to the BS; a current number of D2D MSs that are connected to the BS; a current number of PS MSs that are connected to the BS; and/or a current number of PS D2D MSs that are connected to the BS, or other information. For example, based on information known by BS 210, BS 210 may select a DL only D2D assistance mode if there are greater than a first threshold number (e.g., 10) of D2D PS MSs that are active or connected to the BS, but may select an UL/DL D2D assistance mode if there are greater than a second threshold number (e.g., 30) of active or connected to the BS.

In addition, as noted above, the BS 210 may select a new mode of operation based on information received via one or more messages during the transition period 222, such as based on one or more D2D assistance request messages 230, which may include, for examples, RRC connection establishment/re-establishment request messages 232 and/or D2D capability indication messages (e.g., PS D2D MS capability indications), or other messages from MSs.

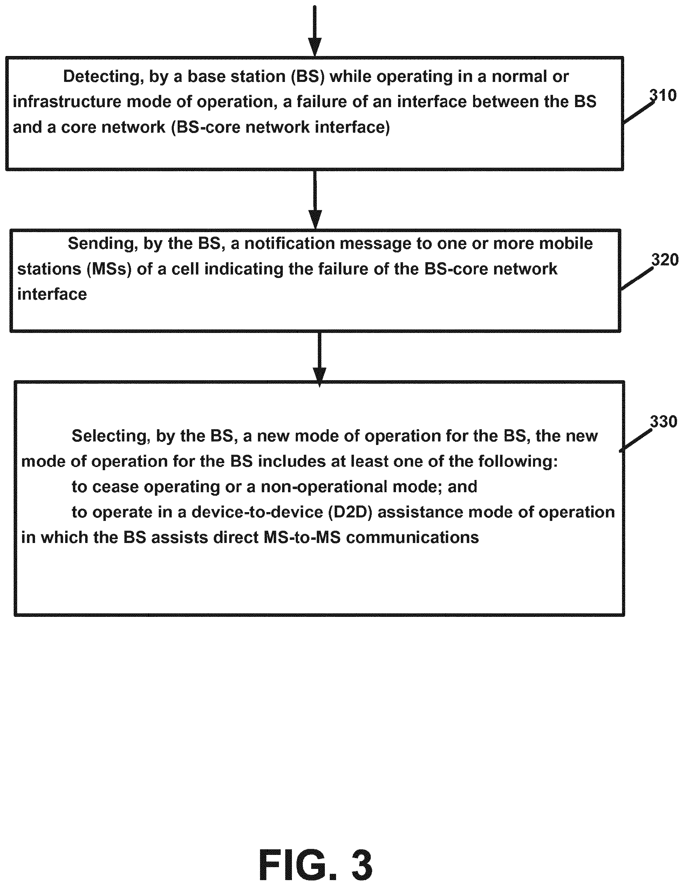

According to an example implementation, BS 210 may select a new mode of operation based on a number of D2D assistance requests. For example, the BS may select a new mode based on the following: selecting to cease operating or the non-operational mode if less than a first threshold of D2D assistance requests are received; selecting a downlink (DL) only D2D mode in which the BS assists MS-to-MS communication by transmitting DL signals to one or more MSs if at least a first threshold and less than a second threshold of D2D assistance requests are received; and selecting an uplink/downlink (UL/DL) D2D mode in which the BS assists MS-to-MS communications by transmitting DL signals to one or more of the MSs and by receiving UL signals from one or more of the MSs if at least the second threshold of D2D assistance requests are received. FIG. 3 is a flow chart illustrating operation of a base station (BS) according to an example implementation. The method may include several operations. Operation 310 may include receiving detecting, by a base station (BS) while operating in a normal or infrastructure mode of operation, a failure of an interface between the BS and a core network (BS-core network interface). Operation 320 may include sending, by the BS, a notification message to one or more mobile stations (MSs) of a cell indicating the failure of the BS-core network interface. Operation 330 may include selecting, by the BS, a new mode of operation for the BS, the new mode of operation for the BS includes at least one of the following: to cease operating or a non-operational mode; and to operate in a device-to-device (D2D) assistance mode of operation in which the BS assists direct MS-to-MS communications. In another example implementation, the method of FIG. 3 may further include sending, by the BS to the one or more MSs in the cell, a mode indication message that identifies the new selected mode of operation.

In another example implementation, the method of FIG. 3 may further include receiving, by the BS from one or more of the MSs of the cell, a device-to-device (D2D) assistance request that requests the BS to assist with direct MS-to-MS communications for the cell.

In another example implementation, the method of FIG. 3 may further include receiving, by the BS from one or more of the MSs of the cell, a device-to-device (D2D) assistance request that requests the BS to assist with direct MS-to-MS communications for the cell; and wherein the selecting the new mode of operation comprises selecting the D2D assistance mode of operation if a threshold number of D2D assistance requests are received, and otherwise, selecting to cease operating or the non-operational mode.

In another example implementation, the method of FIG. 3 may further include receiving, by the BS from one or more of the MSs of the cell, a device-to-device (D2D) assistance request that requests the BS to assist with direct MS-to-MS communications for the cell; and wherein the selecting the new mode of operation includes: selecting to cease operating or the non-operational mode if less than a first threshold of D2D assistance requests are received; selecting a downlink (DL) only D2D assistance mode in which the BS assists MS-to-MS communication by transmitting DL signals to one or more MSs if at least a first threshold and less than a second threshold of D2D assistance requests are received; and selecting an uplink/downlink (UL/DL) D2D assistance mode in which the BS assists MS-to-MS communications by transmitting DL signals to one or more of the MSs and by receiving UL signals from one or more of the MSs if at least the second threshold of D2D assistance requests are received.

In another example implementation, the method of FIG. 3 may further include determining a number of D2D capable MSs that are connected to the BS that are capable of D2D communications; and wherein the selecting is performed based at least upon the number of D2D capable MSs that are connected to the BS. In an example implementation, the BS may determine which connected MSs are D2D capable based on capabilities information obtained from the MS during a connection process.

In another example implementation of the method of FIG. 3, the notification message may include an interface status field that indicates the status of the BS-core network interface as failed or broken, the notification message also including a barring information that indicates that an access class of D2D MSs are permitted to access the cell.

In another example implementation, the method of FIG. 3 may further include wherein the notification message includes an interface status field that indicates the status of the BS-core network interface as failed or broken, the notification message also including a barring information that indicates that an access class of public safety D2D MSs are permitted to access the cell.

In another example implementation of the method of FIG. 3, the notification message may include a transition period length field to indicate a period length for the BS to perform a transition from a normal or infrastructure mode of operation to the selected new mode of operation, the BS beginning operating in the new mode of operation at expiration of the transition period length.

In another example implementation, in the method of FIG. 3 the notification message may include a transition period length field to indicate a period length for the BS to perform a transition from a normal or infrastructure mode of operation to the new mode of operation; an interface status field that indicates the status of the BS-core network interface as failed or broken; a barring information that indicates that an access class of public safety D2D MSs are permitted to access resources of the cell; and a cell ID to identify the cell.

In another example implementation, the method of FIG. 3 may further include one or more of the assistance requests comprises a RRC (Radio Resource Control) Connection Establishment/Re-establishment Request with a cause indicated as a D2D assistance request.

In another example implementation, in the method of FIG. 3, one or more of the assistance requests may include a RRC (Radio Resource Control) Connection Establishment/Re-establishment Request with a cause indicated as a D2D assistance request for public safety (PS) MS.

In another example implementation, in the method of FIG. 3, one or more of the assistance requests includes a RRC (Radio Resource Control) Connection Establishment/Re-establishment Request with a cause indicated as emergency call, wherein the BS interprets the emergency call cause as a D2D assistance request.

In another example implementation, in the method of FIG. 3, one or more of the assistance requests comprises a D2D capability indication that indicates that a sending MS is capable of direct MS-to-MS communications.

In another example implementation, in the method of FIG. 3, one or more of the assistance requests includes a D2D capability indication that indicates that a sending MS is a public safety (PS) MS capable of direct MS-to-MS communications.

In another example implementation, in the method of FIG. 3, the BS includes a Long Term Evolution (LTE) enhanced Node B (eNB), and wherein the detecting includes detecting, by the eNB, a failure of a S1 interface between the eNB and the core network.

In another example implementation, in the method of FIG. 3, the BS includes a first BS, the method further including the first BS sending a message via an X2 interface to notify a second BS of the failed BS-core network interface for the first BS.

In another example implementation, in the method of FIG. 3, the BS includes a first BS that has selected to operate in the D2D assistance mode of operation, the method further including the first BS sending a message via an X2 interface to notify a second BS that the first BS is operating in the D2D assistance mode of operation.

In another example implementation, in the method of FIG. 3, the BS includes a first BS that has selected to cease operation or the non-operational mode, the method further including the first BS sending a message via an X2 interface to notify a second BS that the first BS will cease to operate based on the failed BS-core network interface.

An apparatus may include at least one processor and at least one memory including computer instructions, when executed by the at least one processor, cause the apparatus to: detect, by a base station (BS) while operating in a normal or infrastructure mode of operation, a failure of an interface between the BS and a core network (BS-core network interface); send, by the BS, a notification message to one or more mobile stations (MSs) of a cell indicating the failure of the BS-core network interface; and select, by the BS, a new mode of operation for the BS, the new mode of operation for the BS includes at least one of the following: to cease operating or a non-operational mode; and to operate in a device-to-device (D2D) assistance mode of operation in which the BS assists direct MS-to-MS communications.

A computer program product is provided. The computer program product includes a non-transitory computer-readable storage medium and storing executable code that, when executed by at least one data processing apparatus, is configured to cause the at least one data processing apparatus to perform a method including: detecting, by a base station (BS) while operating in a normal or infrastructure mode of operation, a failure of an interface between the BS and a core network (BS-core network interface); sending, by the BS, a notification message to one or more mobile stations (MSs) of a cell indicating the failure of the BS-core network interface; and selecting, by the BS, a new mode of operation for the BS, the new mode of operation for the BS includes at least one of the following: to cease operating or a non-operational mode; and to operate in a device-to-device (D2D) assistance mode of operation in which the BS assists direct MS-to-MS communications.

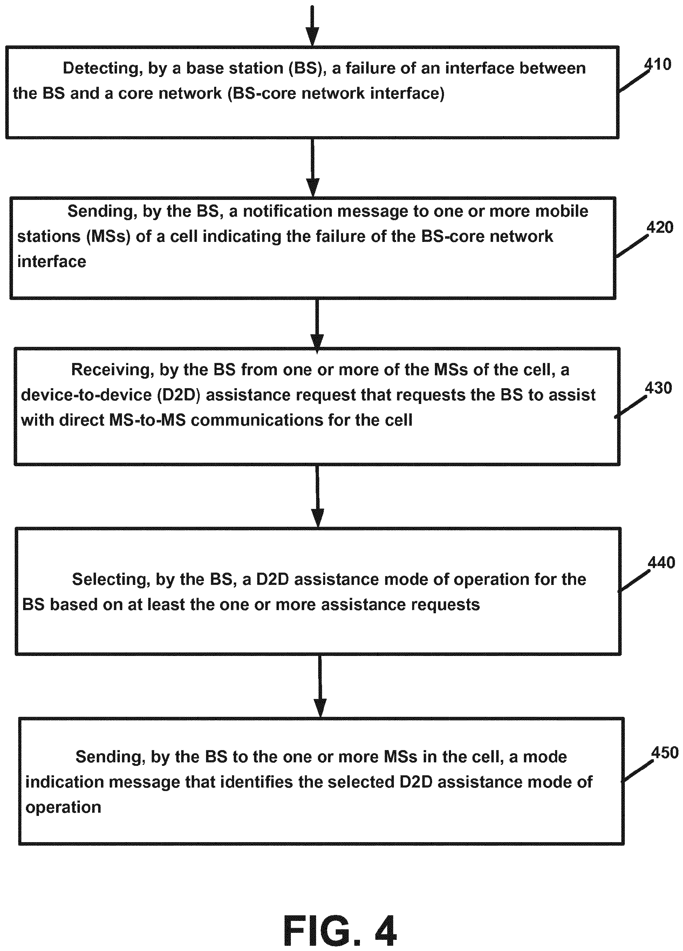

FIG. 4 is a flow chart illustrating operation of a base station according to another example implementation. Operation 410 may include detecting, by a base station (BS), a failure of an interface between the BS and a core network (BS-core network interface). Operation 420 may include sending, by the BS, a notification message to one or more mobile stations (MSs) of a cell indicating the failure of the BS-core network interface. Operation 430 may include receiving, by the BS from one or more of the MSs of the cell, a device-to-device (D2D) assistance request that requests the BS to assist with direct MS-to-MS communications for the cell. Operation 440 may include selecting, by the BS, a D2D assistance mode of operation for the BS based on at least the one or more assistance requests. And, operation 450 may include sending, by the BS to the one or more MSs in the cell, a mode indication message that identifies the selected D2D assistance mode of operation.

In another example implementation, in the method of FIG. 4, the notification message includes an interface status field that indicates the status of the BS-core network interface as failed or broken, the notification message also including a barring information that indicates that an access class of public safety D2D MSs are permitted to access resources of the cell.

In another example implementation, in the method of FIG. 4, the notification message includes a transition period length field to indicate a period length for the BS to perform a transition from a normal or infrastructure mode of operation to the D2D assistance mode of operation, the BS beginning operating in the D2D assistance mode of operation at expiration of the transition period length.

In another example implementation, in the method of FIG. 4, the notification message includes: a transition period length field to indicate a period length for the BS to perform a transition from a normal or infrastructure mode of operation to the D2D assistance mode of operation; an interface status field that indicates the status of the BS-core network interface as failed or broken; a barring information that indicates that an access class of public safety D2D MSs are permitted to access resources of the cell; and a cell ID to identify the cell.

In another example implementation, in the method of FIG. 4, one or more of the assistance requests includes a RRC (Radio Resource Control) Connection Establishment/Re-establishment Request with a cause indicated as a D2D assistance request.

In another example implementation, in the method of FIG. 4, one or more of the assistance requests includes a RRC (Radio Resource Control) Connection Establishment/Re-establishment Request with a cause indicated as emergency call.

In another example implementation, in the method of FIG. 4, one or more of the assistance requests includes a RRC (Radio Resource Control) Connection Establishment/Re-establishment Request with a cause indicated as a D2D assistance request for public safety (PS) MS.

In another example implementation, in the method of FIG. 4, one or more of the assistance requests includes a D2D capability indication that indicates that a sending MS is capable of direct MS-to-MS communications.

In another example implementation, in the method of FIG. 4, the selected D2D assistance mode of operation includes at least one of the following: a downlink (DL) only D2D assistance mode in which the BS assists MS-to-MS communications by transmitting DL signals to one or more MSs; and an uplink/downlink (UL/DL) D2D assistance mode in which the BS assists MS-to-MS communications by transmitting DL signals to one or more MSs and by receiving UL signals from one or more of the MSs.

An apparatus is provided that includes at least one processor and at least one memory including computer instructions, when executed by the at least one processor, cause the apparatus to: detect, by a base station (BS), a failure of an interface between the BS and a core network (BS-core network interface); send, by the BS, a notification message to one or more mobile stations (MSs) of a cell indicating the failure of the BS-core network interface; receive, by the BS from one or more of the MSs of the cell, a device-to-device (D2D) assistance request that requests the BS to assist with direct MS-to-MS communications for the cell; select, by the BS, a D2D assistance mode of operation for the BS based on at least the one or more assistance requests; and send, by the BS to the one or more MSs in the cell, a mode indication message that identifies the selected D2D assistance mode of operation.

A computer program product is provided and includes a non-transitory computer-readable storage medium and storing executable code that, when executed by at least one data processing apparatus, is configured to cause the at least one data processing apparatus to perform a method including: detecting, by a base station (BS), a failure of an interface between the BS and a core network (BS-core network interface); sending, by the BS, a notification message to one or more mobile stations (MSs) of a cell indicating the failure of the BS-core network interface; receiving, by the BS from one or more of the MSs of the cell, a device-to-device (D2D) assistance request that requests the BS to assist with direct MS-to-MS communications for the cell; selecting, by the BS, a D2D assistance mode of operation for the BS based on at least the one or more assistance requests; and sending, by the BS to the one or more MSs in the cell, a mode indication message that identifies the selected D2D assistance mode of operation.

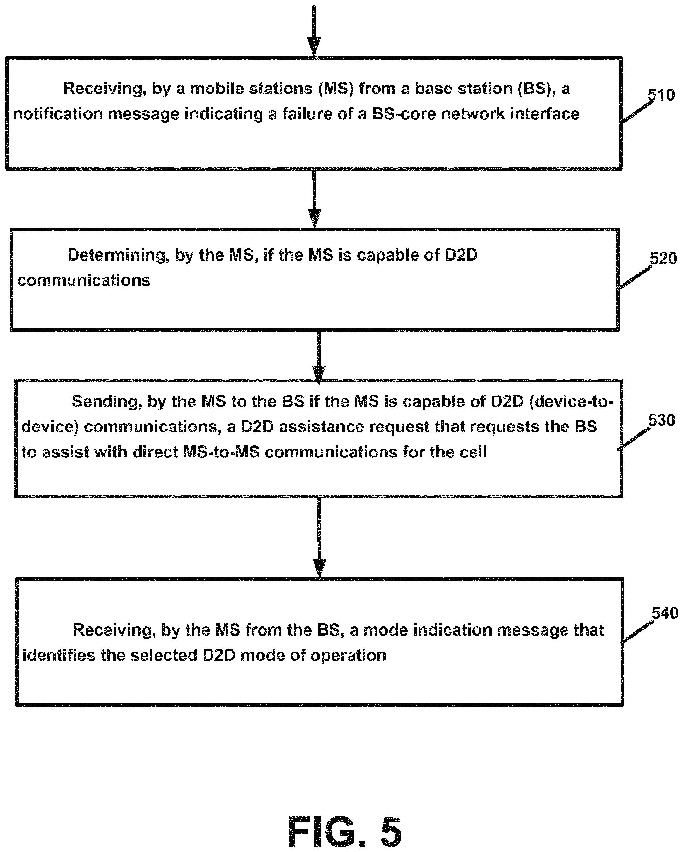

FIG. 5 is a flow chart illustrating operation of a mobile station according to an example implementation. Operation 510 may include receiving, by a mobile stations (MS) from a base station (BS), a notification message indicating a failure of a BS-core network interface. Operation 520 may include determining, by the MS, if the MS is capable of D2D communications. Operation 530 may include sending, by the MS to the BS if the MS is capable of D2D (device-to-device) communications, a D2D assistance request that requests the BS to assist with direct MS-to-MS communications for the cell. And, operation 540 may include receiving, by the MS from the BS, a mode indication message that identifies the selected D2D assistance mode of operation.

In another example implementation, the method of FIG. 5 further includes the MS: operating in a D2D mode of operation after expiration of a transition period length identified by the BS if the MS is capable of D2D communications; and otherwise, transitioning to an idle or detached state with respect to the BS if the MS is not capable of D2D communications.

In another example implementation, the method of FIG. 5 further includes communicating, by the MS if the MS is capable of D2D communications, with another MS with assistance from the BS operating in the D2D assistance mode of operation.

In another example implementation, in the method of FIG. 5, the notification message includes an interface status field that indicates the status of the BS-core network interface as failed or broken, the notification message also including a barring information that indicates that an access class of public safety D2D MSs are permitted to access resources of the cell, and the method further including the MS determining that the MS is a public safety D2D MS before sending the assistance request.

In another example implementation, in the method of FIG. 5, the notification message includes: a transition period length field to indicate a period length for the BS to perform a transition from a normal or infrastructure mode of operation to the D2D assistance mode of operation; an interface status field that indicates the status of the BS-core network interface as failed or broken; a barring information that indicates that an access class of public safety D2D MSs are permitted to access resources of the cell; and a cell ID to identify the cell.

In another example implementation, in the method of FIG. 5, the assistance request includes a RRC (Radio Resource Control) Connection Establishment/Re-establishment Request with a cause indicated as a D2D assistance request.

In another example implementation, in the method of FIG. 5, the assistance request includes a D2D capability indication that indicates that the MS is capable of direct MS-to-MS communications.

According to another example implementation, an apparatus is provided that includes at least one processor and at least one memory including computer instructions, when executed by the at least one processor, cause the apparatus to: receive, by a mobile stations (MS) from a base station (BS), a notification message indicating a failure of a BS-core network interface; determine, by the MS, if the MS is capable of D2D communications; send, by the MS to the BS if the MS is capable of D2D (device-to-device) communications, a D2D assistance request that requests the BS to assist with direct MS-to-MS communications for the cell; and receive, by the MS from the BS, a mode indication message that identifies the selected D2D assistance mode of operation.

According to another example implementation, a computer program product is provided that includes a non-transitory computer-readable storage medium and storing executable code that, when executed by at least one data processing apparatus, is configured to cause the at least one data processing apparatus to perform a method including: receiving, by a mobile stations (MS) from a base station (BS), a notification message indicating a failure of a BS-core network interface; determining, by the MS, if the MS is capable of D2D communications; sending, by the MS to the BS if the MS is capable of D2D (device-to-device) communications, a D2D assistance request that requests the BS to assist with direct MS-to-MS communications for the cell; and receiving, by the MS from the BS, a mode indication message that identifies the selected D2D assistance mode of operation.

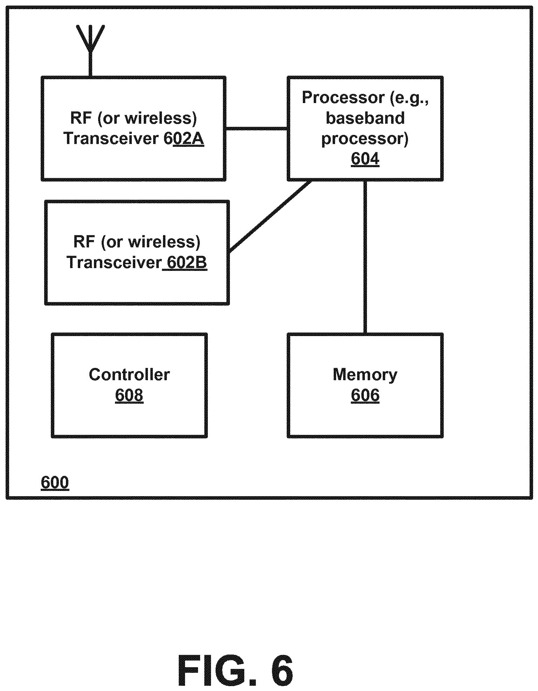

FIG. 6 is a block diagram of a wireless station (e.g., BS or MS) 600 according to an example implementation. The wireless station 600 may include, for example, two RF (radio frequency) or wireless transceivers 602A, 602B, where each wireless transceiver includes a transmitter to transmit signals and a receiver to receive signals. The wireless station also includes a processor 604 to execute instructions or software and control transmission and receptions of signals, and a memory 606 to store data and/or instructions.

Processor 604 may also make decisions or determinations, generate frames, packets or messages for transmission, decode received frames or messages for further processing, and other tasks or functions described herein. Processor 604, which may be a baseband processor, for example, may generate messages, packets, frames or other signals for transmission via wireless transceiver 602. Processor 604 may control transmission of signals or messages over a wireless network, and may receive signals or messages, etc., via a wireless network (e.g., after being down-converted by wireless transceiver 602, for example). Processor 604 may be programmable and capable of executing software or other instructions stored in memory or on other computer media to perform the various tasks and functions described above, such as one or more of the tasks or methods described above. Processor 604 may be (or may include), for example, hardware, programmable logic, a programmable processor that executes software or firmware, and/or any combination of these. Using other terminology, processor 604 and transceiver 602 together may be considered as a wireless transmitter/receiver system, for example.

In addition, referring to FIG. 6, a controller (or processor) 608 may execute software and instructions, and may provide overall control for the station 600, and may provide control for other systems not shown in FIG. 6, such as controlling input/output devices (e.g., display, keypad), and/or may execute software for one or more applications that may be provided on wireless station 600, such as, for example, an email program, audio/video applications, a word processor, a Voice over IP application, or other application or software.

In addition, a storage medium may be provided that includes stored instructions, which when executed by a controller or processor may result in the processor 604, or other controller or processor, performing one or more of the functions or tasks described above.

Implementations of the various techniques described herein may be implemented in digital electronic circuitry, or in computer hardware, firmware, software, or in combinations of them. Implementations may implemented as a computer program product, i.e., a computer program tangibly embodied in an information carrier, e.g., in a machine-readable storage device or in a propagated signal, for execution by, or to control the operation of, a data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in, special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

## Claims

1. A method comprising:
detecting (214, 310), by a base station, a failure of an interface between the base station and a core network (151, 143)
sending (216, 320), by the base station, during a transition period in which the base station operates and continues operating in a normal cellular or infrastructure mode, a notification message to one or more mobile stations of a cell indicating the failure of the base station-core network interface; and
performing, by the base station, either a first set of operations or a second set of operations, depending on base station's capabilities or requests from the mobile stations,
the first set of operations comprising;
selecting (234, 330), by the base station, within the transition period, a new mode of operation for the base station, the new mode of operation for the base station including at least one of the following:
to cease operating or a non-operational mode; and
to operate in a device-to-device assistance mode of operation in which the base station assists direct mobile station-to-mobile station communications; and
the second set of operations comprising:
receiving (430), by the base station from one or more of the mobile stations in the cell, within the transition period, a device-to-device assistance request that requests the base station to assist with direct mobile station-to-mobile station communications for the cell;
selecting (440), by the base station, within the transition period, device-to-device assistance mode of operation for the base station based on at least the one or more assistance requests; and
sending (450), by the base station to the one or more mobile stations in the cell, a mode indication message that identifies the selected device-to-device assistance mode of operation for the base station.

2. The method of claim 1, wherein the first set of operations further comprises sending (242), by the base station to the one or more mobile stations in the cell, a mode indication message that identifies the new selected mode of operation.

3. The method of claim 1, wherein the first set of operations further comprises receiving (430), by the base station from one or more of the mobile stations in the cell, a device-to-device assistance request that requests the base station to assist with direct mobile station-to-mobile station communications for the cell, wherein the selecting (440) the new mode of operation optionally comprises at least one of following:
selecting the device-to-device assistance mode of operation if a threshold number of device-to-device assistance requests are received, and otherwise, selecting to cease operating or the non-operational mode;
selecting to cease operating or the non-operational mode if less than a first threshold of device-to-device assistance requests are received;
selecting a downlink only device-to-device assistance mode in which the base station assists mobile station-to-mobile station communication by transmitting downlink signals to one or more mobile stations if at least a first threshold and less than a second threshold of device-to-device assistance requests are received; and
selecting an uplink/downlink device-to-device assistance mode in which the base station assists mobile station-to-mobile station communications by transmitting downlink signals to one or more of the mobile stations and by receiving uplink signals from one or more of the mobile stations if at least the second threshold of device-to-device assistance requests are received.

4. The method of claim 1 wherein, when the first set of operations is to be performed, the notification message comprises an interface status field that indicates the status of the base station-core network interface as failed or broken, the notification message also including a barring information that indicates that an access class of device-to-device mobile stations are permitted to access the cell and/or the transition period length field to indicate a period length for the base station to perform a transition from a normal or infrastructure mode of operation to the selected new mode of operation, the base station beginning operating in the new mode of operation at expiration of the transition period length.

5. The method of claim 1 wherein one or more of the assistance requests comprises a Radio Resource Control Connection Establishment/Re-establishment Request with a cause indicated as a device-to-device assistance request and/or as emergency call, wherein the base station interprets the emergency call cause as a device-to-device assistance request.

6. The method of claim 1 wherein the base station comprises a Long Term Evolution enhanced Node B, and wherein the detecting comprises detecting, by the enhanced Node B, a failure of a S1 interface between the enhanced Node B and the core network.

7. The method of claim 1 wherein the base station comprises a first base station, the first set of operations further comprising the first base station sending a message via an X2 interface to notify a second base station of the failed base station-core network interface for the first base station.

8. The method of claim 1 wherein the base station comprises a first base station that has selected to operate in the device-to-device assistance mode of operation, the first set of operations further comprising the first base station sending a message via an X2 interface to notify a second base station that the first base station is operating in the device-to-device assistance mode of operation.

9. The method of claim 1 wherein the base station comprises a first base station that has selected to cease operation or the non-operational mode, the first set of operations further comprising the first base station sending a message via an X2 interface to notify a second base station that the first base station will cease to operate based on the failed base station-core network interface.

10. A base station (134) comprising at least one processor and at least one memory including computer instructions, when executed by the at least one processor, cause the base station to:
detect, by the base station, a failure of an interface between the base station and a core network;
send, by the base station, during a transition period in which the base station operates and continues operating in a normal cellular or infrastructure mode, notification message to one or more mobile stations in a cell indicating the failure of the base station-core network interface; and
depending on base station's capabilities or requests from the mobile stations, either
select, by the base station, within the transition period, a new mode of operation for the base station, the new mode of operation for the base station including at least one of the following:
to cease operating or a non-operational mode; and
to operate in a device-to-device assistance mode of operation in which the base station assists direct mobile station-to-mobile station communications;
or
receive, by the base station from one or more of the mobile stations in the cell, within the transition period, a device-to-device assistance request that requests the base station to assist with direct mobile station-to-mobile station communications for the cell;
select, by the base station, within the transition period, device-to-device assistance mode of operation for the base station based on at least the one or more assistance requests; and
send, by the base station to the one or more mobile stations in the cell, a mode indication message that identifies the selected device-to-device assistance mode of operation.

11. A computer program product, the computer program product comprising a non-transitory computer-readable storage medium and storing executable code that, when executed by at least one base station apparatus, is configured to cause the at least one base station apparatus to perform a method according to any one of claims 1 to 9.

## Patentansprüche

1. Verfahren, umfassend:
Erkennen (214, 310), durch eine Basisstation, eines Defekts einer Schnittstelle zwischen der Basisstation und einem Kernnetzwerk (151, 143) Senden (216, 320), durch die Basisstation, während einer Übergangsperiode, in der die Basisstation in einem normalen zellularen oder Infrastruktur-Modus betrieben und weiterhin betrieben wird, einer Mitteilungsnachricht an eine oder mehrere Mobilstationen einer Zelle, die den Defekt der Basisstation-Kernnetzwerk-Schnittstelle anzeigt; und
Durchführen, durch die Basisstation, entweder eines ersten Satzes von Vorgängen oder eines zweiten Satzes von Vorgängen, abhängig von den Fähigkeiten der Basisstation oder den Anforderungen von den Mobilstationen, wobei der erste Satz von Vorgängen umfasst:
Auswählen (234, 330), durch die Basisstation innerhalb der Übergangsperiode, eines neuen Betriebsmodus für die Basisstation, wobei der neue Betriebsmodus für die Basisstation mindestens eine der folgenden Möglichkeiten beinhaltet:
Einstellen des Betriebs oder Verwenden eines Nichtbetriebsmodus; und
Betrieb in einem Geräte-zu-Geräte-Unterstützungsmodus, in der die Basisstation die direkte Kommunikation von Mobilstation zu Mobilstation unterstützt; und
wobei der zweite Satz von Vorgängen umfasst:
Empfangen (430), durch die Basisstation von einer oder mehreren der Mobilstationen in der Zelle innerhalb der Übergangsperiode, einer Geräte-zu-Geräte-Unterstützungsanforderung, die die Basisstation auffordert, die direkte Kommunikation von Mobilstation zu Mobilstation für die Zelle zu unterstützen;
Auswählen (440), durch die Basisstation innerhalb der Übergangsperiode, des Geräte-zu-Geräte-Unterstützungsmodus für die Basisstation auf der Grundlage mindestens der einen oder den mehreren Unterstützungsanforderungen; und
Senden (450), durch die Basisstation an die eine oder die mehreren Mobilstationen in der Zelle, einer Modusanzeigenachricht, die den ausgewählten Geräte-zu-Geräte-Unterstützungsbetriebsmodus für die Basisstation identifiziert.

2. Verfahren nach Anspruch 1, wobei der erste Satz von Vorgängen ferner das Senden (242), durch die Basisstation an die eine oder die mehreren Mobilstationen in der Zelle, einer Modusanzeigenachricht, die den neuen ausgewählten Betriebsmodus identifiziert, umfasst.

3. Verfahren nach Anspruch 1, wobei der erste Satz von Vorgängen ferner das Empfangen (430), durch die Basisstation von einer oder mehreren der Mobilstationen in der Zelle, einer Geräte-zu-Geräte-Unterstützungsanforderung umfasst, die die Basisstation auffordert, die direkte Kommunikation von Mobilstation zu Mobilstation für die Zelle zu unterstützen, wobei das Auswählen (440) des neuen Betriebsmodus optional mindestens einen der folgenden Vorgänge umfasst:
Auswahl des Geräte-zu-Geräte-Unterstützungmodus, wenn eine Schwellenanzahl von Geräte-zu-Geräte-Unterstützungsanforderungen empfangen wird, und andernfalls die Auswahl, den Betrieb einzustellen oder den Nichtbetriebsmodus zu verwenden;
Auswahl, den Betrieb einzustellen oder den Nichtbetriebsmodus zu verwenden, wenn weniger als eine erste Schwellenanzahl von Geräte-zu-Geräte-Unterstützungsanforderungen empfangen wird;
Auswahl eines Geräte-zu-Geräte-Unterstützungsmodus nur für den Downlink, in dem die Basisstation die Kommunikation von Mobilstation zu Mobilstation unterstützt, indem sie Downlink-Signale an eine oder mehrere Mobilstationen sendet, wenn mindestens eine erste Schwellenanzahl und weniger als eine zweite Schwellenanzahl von Geräte-zu-Geräte-Unterstützungsanforderungen empfangen wird; und
Auswahl eines Geräte-zu-Geräte-Unterstützungmodus für Uplink/Downlink, in dem die Basisstation die Kommunikation von Mobilstation zu Mobilstation unterstützt, indem sie Downlink-Signale an eine oder mehrere der Mobilstationen sendet und Uplink-Signale von einer oder mehreren der Mobilstationen empfängt, wenn mindestens die zweite Schwellenanzahl von Geräte-zu-Geräte-Unterstützungsanforderungen empfangen wird.

4. Verfahren nach Anspruch 1, wobei, wenn der erste Satz von Vorgängen durchgeführt werden soll, die Mitteilungsnachricht ein Schnittstellenstatusfeld umfasst, das den Status der Basisstation-Kernnetzwerk-Schnittstelle als ausgefallen oder defekt anzeigt, wobei die Mitteilungsnachricht auch eine Sperrinformation, die anzeigt, dass es einer Zugangsklasse von Geräte-zu-Geräte-Mobilstationen erlaubt ist, auf die Zelle zuzugreifen, und/oder das Feld für die Übergangsperiodenlänge beinhaltet, um eine Periodenlänge für die Basisstation zum Durchführen eines Übergang von einer normalen oder Infrastruktur-Betriebsart zum ausgewählten neuen Betriebsmodus anzuzeigen, wobei die Basisstation nach Ablauf der Übergangsperiodenlänge den Betrieb im neuen Betriebsmodus beginnt.

5. Verfahren nach Anspruch 1, wobei eine oder mehrere der Unterstützungsanforderungen eine "Radio Resource Control"-Verbindungsherstellungs-/- wiederherstellungsanforderung mit einem Grund umfassen, der als eine Geräte-zu-Geräte-Unterstützungsanforderung und/oder als Notruf angezeigt wird, wobei die Basisstation den Notrufgrund als eine Geräte-zu-Geräte-Unterstützungsanforderung interpretiert.

6. Verfahren nach Anspruch 1, wobei die Basisstation einen Long Term Evolution Enhanced Node B umfasst und wobei die Erkennung das Erkennen, durch den Enhanced Node B, eines Defekts einer S1-Schnittstelle zwischen dem Enhanced Node B und dem Kernnetzwerk umfasst.

7. Verfahren nach Anspruch 1, wobei die Basisstation eine erste Basisstation umfasst, wobei der erste Satz von Vorgängen ferner umfasst, dass die erste Basisstation eine Nachricht über eine X2-Schnittstelle sendet, um eine zweite Basisstation über die defekte Basisstation-Kernnetzwerk-Schnittstelle für die erste Basisstation zu benachrichtigen.

8. Verfahren nach Anspruch 1, wobei die Basisstation eine erste Basisstation umfasst, die den Betrieb im Geräte-zu-Geräte-Unterstützungsmodus ausgewählt hat, wobei der erste Satz von Vorgängen ferner umfasst, dass die erste Basisstation eine Nachricht über eine X2-Schnittstelle sendet, um einer zweiten Basisstation mitzuteilen, dass die erste Basisstation im Geräte-zu-Geräte-Unterstützungsbetriebsmodus betrieben wird.

9. Verfahren nach Anspruch 1, wobei die Basisstation eine erste Basisstation umfasst, die die Auswahl getroffen hat, den Betrieb einzustellen oder den Nichtbetriebsmodus zu verwenden, wobei der erste Satz von Vorgängen ferner umfasst, dass die erste Basisstation eine Nachricht über eine X2-Schnittstelle sendet, um einer zweiten Basisstation mitzuteilen, dass die erste Basisstation den Betrieb basierend auf der defekten Basisstation-Kernnetzwerk-Schnittstelle einstellen wird.

10. Basisstation (134), umfassend mindestens einen Prozessor und mindestens einen Speicher, der Computeranweisungen beinhaltet, die bei ihrer Ausführung durch den mindestens einen Prozessor die Basisstation zu folgenden Vorgängen veranlassen:
Erkennen, durch die Basisstation, eines Defekts einer Schnittstelle zwischen der Basisstation und einem Kernnetzwerk;
Senden, durch die Basisstation, während einer Übergangsperiode, in der die Basisstation in einem normalen zellularen oder Infrastruktur-Modus betrieben und weiterhin betrieben wird, einer Mitteilungsnachricht an eine oder mehrere Mobilstationen in einer Zelle, die den Defekt der Basisstation-Kernnetzwerk-Schnittstelle anzeigt; und
abhängig von Fähigkeiten der Basisstation oder Anforderungen von den Mobilstationen, entweder Auswählen, durch die Basisstation innerhalb der Übergangsperiode, eines neuen Betriebsmodus für die Basisstation, wobei der neue Betriebsmodus für die Basisstation mindestens eine der folgenden Möglichkeiten beinhaltet:
Einstellen des Betriebs oder Verwenden eines Nichtbetriebsmodus; und
Betrieb in einem Geräte-zu-Geräte-Unterstützungsmodus, in der die Basisstation die direkte Kommunikation von Mobilstation zu Mobilstation unterstützt;
oder
Empfangen, durch die Basisstation von einer oder mehreren der Mobilstationen in der Zelle innerhalb der Übergangsperiode, einer Geräte-zu-Geräte-Unterstützungsanforderung, die die Basisstation auffordert, die direkte Kommunikation von Mobilstation zu Mobilstation für die Zelle zu unterstützen;
Auswählen, durch die Basisstation innerhalb der Übergangsperiode, eines Geräte-zu-Geräte-Unterstützungsmodus für die Basisstation auf der Grundlage mindestens der einen oder den mehreren Unterstützungsanforderungen; und
Senden, durch die Basisstation an die eine oder die mehreren Mobilstationen in der Zelle, einer Modusanzeigenachricht, die den ausgewählten Geräte-zu-Geräte-Unterstützungsbetriebsmodus identifiziert.

11. Computerprogrammprodukt, wobei das Computerprogrammprodukt ein nichtflüchtiges computerlesbares Speichermedium umfasst und ausführbaren Code speichert, der bei seiner Ausführung durch mindestens eine Basisstationsvorrichtung dafür ausgelegt ist, die mindestens eine Basisstationsvorrichtung zu veranlassen, ein Verfahren nach einem der Ansprüche 1 bis 9 durchzuführen.

## Revendications

1. Procédé comprenant :
la détection (214, 310), par une station de base, d'une défaillance sur une interface entre la station de base et un réseau central (151, 143) ;
l'envoi (216, 320), par la station de base, pendant une période de transition où la station de base fonctionne et continue de fonctionner dans un mode cellulaire ou d'infrastructure normal, à une ou plusieurs stations mobiles d'une cellule, d'un message de notification indiquant la défaillance de l'interface station de base-réseau central ; et
la réalisation, par la station de base, d'un premier ensemble d'opérations ou d'un second ensemble d'opérations, selon les capacités de la station de base ou des demandes en provenance des stations mobiles,
le premier ensemble d'opérations comprenant :
la sélection (234, 330), par la station de base, pendant la période de transition, d'un nouveau mode de fonctionnement pour la station de base, le nouveau mode de fonctionnement pour la station de base incluant au moins un mode de fonctionnement suivant :
arrêter de fonctionner ou sélectionner un mode non opérationnel ; et
fonctionner dans un mode de fonctionnement d'assistance entre dispositifs, dans lequel la station de base assiste des communications directes entre stations mobiles ; et
le second ensemble d'opérations comprenant :
la réception (430), par la station de base en provenance d'une ou plusieurs des stations mobiles dans la cellule, pendant la période de transition, d'une demande d'assistance entre dispositifs qui demande à la station de base d'assister des communications directes entre stations mobiles pour la cellule ;
la sélection (440), par la station de base, pendant la période de transition, d'un mode de fonctionnement d'assistance entre dispositifs pour la station de base sur la base, au moins, de la ou des demandes d'assistance ; et
l'envoi (450), par la station de base à la ou aux stations mobiles dans la cellule, d'un message d'indication de mode qui identifie le mode de fonctionnement d'assistance entre dispositifs sélectionné pour la station de base.

2. Procédé selon la revendication 1, dans lequel le premier ensemble d'opérations comprend en outre l'envoi (242), par la station de base à la ou aux stations mobiles dans la cellule, un message d'indication de mode qui identifie le nouveau mode de fonctionnement sélectionné.

3. Procédé selon la revendication 1, dans lequel le premier ensemble d'opérations comprend en outre la réception (430), par la station de base en provenance d'une ou plusieurs des stations mobiles dans la cellule, une demande d'assistance entre dispositifs qui demande à la station de base d'assister des communications directes entre stations mobiles pour la cellule, la sélection (440) du nouveau mode de fonctionnement comprenant éventuellement au moins une des opérations suivantes :
la sélection du mode de fonctionnement d'assistance entre dispositifs si un nombre-seuil de demandes d'assistance entre dispositifs est reçu et, sinon, la sélection de l'arrêt du fonctionnement ou la sélection du mode non opérationnel ;
la sélection de l'arrêt du fonctionnement ou la sélection du mode non opérationnel si un nombre inférieur à un premier seuil de demandes d'assistance entre dispositifs est reçu ;
la sélection d'un mode d'assistance entre dispositifs en liaison descendante seule, dans lequel la station de base assiste une communication entre stations mobiles en émettant des signaux en liaison descendante vers une ou plusieurs stations mobiles, si un nombre au moins égal à un premier seuil et inférieur à un second seuil de demandes d'assistance entre dispositifs est reçu ; et
la sélection d'un mode d'assistance entre dispositifs en liaison montante/descendante, dans lequel la station de base assiste des communications entre stations mobiles en émettant des signaux en liaison descendante vers une ou plusieurs stations mobiles et en recevant des signaux en liaison montante en provenance d'une ou plusieurs des stations mobiles, si un nombre au moins égal au second seuil de demandes d'assistance entre dispositifs est reçu.

4. Procédé selon la revendication 1, dans lequel, quand le premier ensemble d'opérations doit être réalisé, le message de notification comprend un champ de statut d'interface qui indique que le statut de l'interface station de base-réseau central est défaillant ou rompu, le message de notification incluant également une information de blocage qui indique qu'une classe d'accès de stations mobiles entre dispositifs est autorisée à accéder à la cellule, et/ou le champ de longueur de période de transition pour indiquer une longueur de période à la station de base pour que celle-ci effectue une transition d'un mode normal ou d'infrastructure au nouveau mode de fonctionnement sélectionné, la station de base commençant à fonctionner dans le nouveau mode de fonctionnement à l'expiration de la longueur de période de transition.

5. Procédé selon la revendication 1, dans lequel un ou plusieurs des demandes d'assistance comprennent une demande d'établissement/rétablissement de connexion de contrôle des ressources radio avec une cause indiquée comme une demande d'assistance entre dispositifs et/ou comme un appel d'urgence, la station de base interprétant la cause de type appel d'urgence comme une demande d'assistance entre dispositifs.

6. Procédé selon la revendication 1, dans lequel la station de base comprend un nœud B amélioré d'évolution à long terme et dans lequel la détection comprend la détection, par le nœud B amélioré, d'une défaillance d'une interface S1 entre le nœud B amélioré et le réseau central.

7. Procédé selon la revendication 1, dans lequel la station de base comprend une première station de base, le premier ensemble d'opérations comprenant en outre l'envoi, par la première station de base, d'un message par l'intermédiaire d'une interface X2 pour notifier à une seconde station de base la défaillance de l'interface station de base-réseau central pour la première station de base.

8. Procédé selon la revendication 1, dans lequel la station de base comprend une première station de base qui a sélectionné un fonctionnement dans le mode de fonctionnement d'assistance entre dispositifs, le premier ensemble d'opérations comprenant en outre l'envoi, par la première station de base, d'un message par l'intermédiaire d'une interface X2 pour notifier à une seconde station de base que la première station de base fonctionne dans le mode de fonctionnement d'assistance entre dispositifs.

9. Procédé selon la revendication 1, dans lequel la station de base comprend une première station de base qui a sélectionné l'arrêt du fonctionnement ou sélectionné le mode non opérationnel, le premier ensemble d'opérations comprenant en outre l'envoi, par la première station de base, d'un message par l'intermédiaire d'une interface X2 pour notifier à une seconde station de base que la première station de base arrêtera de fonctionner sur la base de la défaillance de l'interface station de base-réseau central.

10. Station de base (134) comprenant au moins un processeur et au moins une mémoire comportant des instructions informatiques qui, lorsqu'elles sont exécutées par l'au moins un processeur, amènent la station de base à :
détecter, par la station de base, une défaillance sur une interface entre la station de base et un réseau central ;
envoyer, par la station de base, pendant une période de transition où la station de base fonctionne et continue de fonctionner dans un mode cellulaire ou d'infrastructure normal, à une ou plusieurs stations mobiles dans une cellule, un message de notification indiquant la défaillance de l'interface station de base-réseau central ; et
selon les capacités de la station de base ou des demandes en provenance des stations mobiles, sélectionner, par la station de base, pendant la période de transition, un nouveau mode de fonctionnement pour la station de base, le nouveau mode de fonctionnement pour la station de base incluant au moins un des modes de fonctionnement suivants :
arrêter de fonctionner ou sélectionner un mode non opérationnel ; et
fonctionner dans un mode de fonctionnement d'assistance entre dispositifs, dans lequel la station de base assiste des communications directes entre stations mobiles ; ou
recevoir, par la station de base en provenance d'une ou plusieurs des stations mobiles dans la cellule, pendant la période de transition, une demande d'assistance entre dispositifs qui demande à la station de base d'assister des communications directes entre stations mobiles pour la cellule ;
sélectionner, par la station de base, pendant la période de transition, un mode de fonctionnement d'assistance entre dispositifs pour la station de base sur la base, au moins, de la ou des demandes d'assistance ; et
envoyer, par la station de base à la ou aux stations mobiles dans la cellule, un message d'indication de mode qui identifie le mode de fonctionnement d'assistance entre dispositifs sélectionné.

11. Produit de programme informatique, le produit de programme informatique comprenant un support de stockage non temporaire et lisible par ordinateur et stockant un code exécutable qui, lorsqu'il est exécuté par au moins un appareil station de base, est configuré pour amener l'au moins un appareil station de base à réaliser un procédé selon l'une quelconque des revendications 1 à 9.
